# EUROPÄISCHE PATENTSCHRIFT

(11) **EP 2 390 642 B1**
(45) Veröffentlichungstag und Bekanntmachung des Hinweises auf die Patenterteilung: **03.01.2018**
(21) Anmeldenummer: 11004310.6
(22) Anmeldetag: 25.05.2011
(51) Int. Cl.: G01M 1/36, B24B 41/04

(54) **Stelleinrichtung, Stellsystem und Werkzeugmaschine mit Stelleinrichtung oder Stellsystem**
Positioning device, positioning system and machine tool with positioning device or positioning system
Dispositif de réglage, système de réglage et machine-outil dotée d'un dispositif de réglage ou d'un système de réglage

(30) Priorität: 25.05.2010 DE 102010021451
(43) Veröffentlichungstag der Anmeldung: 30.11.2011
(73) Patentinhaber: Dittel Messtechnik GmbH, 86899 Landsberg am Lech (DE)
(72) Erfinder: Bode, Alfred, 86899 Landsberg/Lech (DE)
(74) Vertreter: Manitz Finsterwald Patentanwälte PartmbB

(56) Entgegenhaltungen:
- DE-A1- 4 444 992
- JP-A- 2 190 732
- JP-A- 2005 028 499
- US-A- 3 698 263
- US-B1- 6 210 099

## Beschreibung

Die vorliegende Erfindung betrifft eine Stelleinrichtung, für rotierende Einheiten, insbesondere für Spindeln von Werkzeugmaschinen mit zumindest einem verstellbaren Element und einem Antrieb für das Element zum Verstellen des Elements. Insbesondere betrifft die vorliegende Erfindung eine Wuchteinrichtung wie zum Beispiel einen Wuchtring oder einen Wuchtkopf für rotierende Einheiten mit zumindest einer verstellbaren Wuchtmasse und einem Antrieb zum Verstellen der Wuchtmasse.

Es sind Wuchteinrichtungen bekannt, die einen Antrieb und mehrere verstellbare, auch als Wuchtmassen bezeichnete Gewichte umfassen, die durch den Antrieb so positioniert werden können, dass sie eine vorhandene Unwucht des jeweiligen rotierenden Systems gerade kompensieren. Zur Verstellung solcher Wuchtmassen können beispielsweise Antriebe eingesetzt werden, die ein externes elektromagnetisches Feld generieren, um die Wuchtmassen in der Wuchteinrichtung durch eine elektromagnetische Kraft zu verschieben. Hierdurch ist aber oft nur eine grobe Einstellung der Position der Wuchtmassen möglich, sodass eine präzise Einstellung eines gewünschten Wuchtvektors schwierig ist. Beispielsweise beschreibt US 6,236,934 B1 ein Verfahren, bei dem Ausgleichsgewichte elektromagnetisch und nach dem Prinzip eines Synchronmotors berührungslos durch ein von einem stationär angeordneten Generator selektiv erzeugtes Magnetfeld verstellt werden.

Alternativ können Wuchtringe einen mitrotierenden Elektromotor als Antriebseinheit aufweisen. Derartige Elektromotoren beanspruchen aber einen relativ großen Bauraum und benötigen eine relativ hohe elektrische Leistung. Ferner sind Elektromotoren den beim Rotieren einer Wuchteinrichtung insbesondere bei hohen Drehzahlen auftretenden Fliehkraftbelastungen nicht gewachsen, sodass diese Systeme nur bis zu einer relativ geringen Drehzahl funktionieren. Auch für andere Stellfunktionen in rotierenden Einheiten, wie zum Beispiel für eine Radialverstellung eines Drehmeißels relativ zu einer Werkzeugspindel, sind die bei hohen Drehzahlen auftretenden Fliehkräfte und der hohe Platzbedarf von zum Beispiel Elektromotoren ein Problem.
Stelleinrichtungen für rotierende Einheiten mit derartigen Motoren sind beispielsweise aus JP 2 190732 A, US 6 210 099 B1, US 3 698 263 A und DE 44 44 992 A1 bekannt.

JP 2005 028499 A offenbart eine Stelleinrichtung für eine rotierende Einheit mit zumindest einem verstellbaren Element und einem Ultraschallmotor für das Element zum Verstellen des Elements. Eine ähnliche Stelleinrichtung mit einem Ultraschallmotor in einer rotierenden Einheit ist in EP 0 604 391 A2 und in US 5,125,188 A beschrieben.

Des Weiteren existieren so genannte Hydro-Wuchtsysteme, bei denen eine Flüssigkeit gezielt in eine Mehrzahl von unterschiedlichen, sich zusammen mit der rotierenden Einheit drehende Kammern eingespritzt wird. Diese Systeme sind aber relativ aufwendig und halten den Wuchtzustand nicht, da die eingespritzte Flüssigkeit nach einem Spindelstopp austreten kann. Ein solches Hydrowuchtsystem ist beispielsweise in DD 260762 A beschrieben.

Daneben sind auch "händische" Wuchtverfahren bekannt, bei denen die Gewichte bei ruhendem System per Hand an geeignete Positionen gesetzt werden. Für viele Anwendungen ist ein derartiges manuelles Verfahren allerdings vor allem aufgrund des damit verbundenen Zeitaufwands nicht akzeptabel. Ein händisches Wuchtverfahren ist beispielsweise in JP 60 259927 A beschrieben.

Aufgabe der Erfindung ist es, eine Stelleinrichtung zu schaffen, die bei einfachem Aufbau und geringer Baugröße selbst bei hohen Drehzahlen der rotierenden Einheit ein automatisches, schnelles und präzises Verstellen einer Position von zumindest einem verstellbaren Element ermöglicht.

Diese Aufgabe wird durch eine Stelleinrichtung mit den Merkmalen des Anspruchs 1 gelöst und insbesondere dadurch, dass der Antrieb für das Element einen Schwingungsantrieb umfasst, der eine elektrische Anregungseinheit aufweist, die zumindest einen Elektromagneten umfasst, wobei ein Schwinger vorgesehen ist, der zur magnetischen Kopplung mit dem Elektromagneten ein magnetisches oder magnetisierbares Material aufweist und der durch die Anregungseinheit zu einer Schwingbewegung anregbar ist. Ferner ist eine Umsetzvorrichtung vorgesehen, durch die die Schwingbewegung des Schwingers in eine gerichtete Verstellbewegung des Elements umsetzbar ist. In einem solchen Schwingungsantrieb wird eine mechanische Schwingung eines Körpers erzeugt und in eine Verstellbewegung des Elements umgewandelt. Anders als bei einem Elektromotor, bei dem elektrische Energie in eine fortlaufende rotatorische Bewegung eines Rotors umgesetzt wird, wird bei einem Schwingungsantrieb die Ausgangsenergie, z.B. elektrische Energie, in eine Schwingbewegung umgewandelt, die wiederum zum Antreiben des Elements genutzt wird.

Ein solcher Schwingungsantrieb kann im Vergleich zu einem Elektromotor einen sehr einfachen Aufbau aufweisen, wodurch eine geringe Baugröße und eine kostengünstige Herstellbarkeit gewährleistet werden. Außerdem hat sich gezeigt, dass ein solcher Schwingungsantrieb auch unter hohen Fliehkraftbelastungen zuverlässig arbeiten und somit insbesondere auch in mittenfreien Systemen wie zum Beispiel Ringwuchtsystemen und bei hohen Drehzahlen eingesetzt werden kann. Unter hohen Drehzahlen sind hier insbesondere solche von mehreren 1000 bis einigen 10000 Umdrehungen pro Minute zu verstehen. Grundsätzlich ist die Erfindung für beliebige Drehzahlen der rotierenden Einheit einsetzbar.

Da die Erzeugung einer mechanischen Schwingung in dem Schwingungsantrieb prinzipiell mit einem vergleichsweise geringen energetischen Aufwand möglich ist, wird außerdem ein entsprechend geringer Energieverbrauch des Antriebs gewährleistet.

Vorteilhafte Ausführungsformen der Erfindung sind auch in den Unteransprüchen, der Beschreibung und den Zeichnungen beschrieben.

Erfindungsgemäß weist der Schwingungsantrieb eine elektrische Anregungseinheit auf sowie einen Schwinger, der durch die Anregungseinheit zu einer, insbesondere periodischen, Schwingbewegung anregbar ist, und eine Umsetzvorrichtung, die die Schwingbewegung des Schwingers in eine gerichtete Verstellbewegung des verstellbaren Elements umsetzt.

Vorzugsweise ist die Anregungseinheit ausgebildet, um elektrische Energie in eine Schwingbewegung des Schwingers umzuwandeln. Prinzipiell sind im Rahmen der Erfindung aber auch andere Ausgangsenergieformen denkbar, wie z.B. in einer Feder gespeicherte mechanische Energie.

Erfindungsgemäß umfasst die Anregungseinheit zumindest einen Elektromagneten, wobei ein Schwinger zur magnetischen Kopplung mit dem Elektromagneten ein magnetisches oder magnetisierbares Material aufweist. Der Schwinger kann dabei so in dem Bereich des von dem Elektromagneten erzeugbaren elektromagnetischen Feldes angeordnet sein, dass der Schwinger durch das elektromagnetische Feld insbesondere elastisch auslenkbar und dadurch zu einer Schwingung anregbar ist. Der Schwinger kann dabei mit einem Abschnitt fest in der Stelleinrichtung gelagert sein und einen freien, auslenkbaren Abschnitt aufweisen. Die Auslenkung kann dabei in einer Richtung im Wesentlichen senkrecht zu einer Längsachse des Schwingers erfolgen, wobei eine Steifigkeit des Schwingers eine entgegen der Auslenkung gerichtete mechanische Rückstellkraft des Schwingers bewirkt.

Bevorzugt weist eine Anregungseinheit wenigstens zwei Elektromagnete auf, wobei ein Schwinger zumindest bereichsweise zwischen den zwei Elektromagneten angeordnet ist. Hierbei kann im Bereich des Schwingers ein elektromagnetisches Wechselfeld erzeugt werden, welches abwechselnd eine Kraft in zwei entgegen gesetzte Richtungen auf den Schwinger ausübt. Auf diese Weise kann eine besonders stabile und gleichmäßige Schwingung erzeugt werden. Eine Schwingfrequenz des Schwingers kann zum Beispiel im niedrigen Kilohertz-Bereich (zum Beispiel zwischen 1 kHz und 300 kHz) liegen. Bei einer wie vorstehend beschriebenen Anregung durch Elektromagnete können die Elektromagnete dementsprechend mit einem Wechselstrom angesteuert werden, der eine Frequenz im niedrigen Kilohertz-Bereich aufweist.

Gemäß einer weiteren Ausführungsform umfasst ein Schwinger wenigstens ein durch eine Anregungseinheit ansteuerbares piezoelektrisches Element. Ein solches piezoelektrisches Element kann durch die Anregungseinheit zum Beispiel mit einer elektrischen Wechselspannung beaufschlagbar sein, wodurch das piezoelektrische Element aufgrund des piezoelektrischen Effekts zu einer Schwingbewegung anregbar ist. Ein solches piezoelektrisches Element kann beispielsweise einen Schwingquarz umfassen. Ein solches piezoelektrisches Element kann beispielsweise zu einer Schwingung mit einer Schwingfrequenz im oberen Kilohertz-Bereich oder niedrigen Megahertz-Bereich angeregt werden (z.B. zwischen 600 kHz und 2 MHz).

Wie vorstehend beschrieben, kann eine Umsetzvorrichtung vorgesehen sein, die die aufeinander folgenden Hin- und Herbewegungen des Schwingers in eine Bewegung des verstellbaren Elements in eine bestimmte Richtung umwandelt. Die Umsetzvorrichtung kann hierzu ein um eine Drehachse drehbar gelagertes Organ umfassen und dazu ausgebildet sein, eine Schwingbewegung eines Schwingers in eine Drehbewegung des Organs umzusetzen. Die Umsetzvorrichtung kann dabei so ausgebildet sein, dass ein Organ der Umsetzvorrichtung im Zuge einer Schwingung des Schwingers im Wesentlichen nur während einer Bewegung des Schwingers in eine erste Richtung mit dem Schwinger antriebswirksam gekoppelt ist und während der darauf folgenden Bewegung des Schwingers in die entgegengesetzte Richtung, d.h. nach der Richtungsumkehr des Schwingers, nicht mehr antriebswirksam mit dem Schwinger gekoppelt ist, sodass im Wesentlichen nur die Bewegungen des Schwingers in die eine Richtung auf das Organ übertragen werden und die Bewegungen des Schwingers in die andere Richtung nicht.

Das drehbar gelagerte Organ kann als Klinkenorgan ausgebildet sein. In diesem Fall kann die Umsetzvorrichtung eine Antriebsklinke umfassen, die einen mit dem Schwinger gekoppelten Abschnitt einerseits und einen Klinkenabschnitt andererseits aufweist, wobei der Klinkenabschnitt im Zuge einer Schwingung des Schwingers an dem Klinkenorgan angreift und eine in eine erste Drehrichtung um die Drehachse wirkende Kraft auf das Klinkenorgan ausübt.

Die Umsetzvorrichtung kann auch eine Sperrklinke umfassen, die ein Drehen des Klinkenorgans in eine der ersten Drehrichtung entgegengesetzte zweite Drehrichtung blockiert. Hierdurch kann auf besonders einfache Weise über mehrere Schwingungen hinweg eine gerichtete Bewegung des Klinkenorgans bewirkt werden.

Gemäß einer vorteilhaften Ausführungsform umfasst der Antrieb ein Getriebe, insbesondere ein Zahnradgetriebe, welches zwischen dem verstellbaren Element und einer Umsetzvorrichtung angeordnet ist und eine Bewegung der Umsetzvorrichtung in eine Bewegung des verstellbaren Elements überträgt.

Vorteilhafterweise kann der Antrieb eine Schaltvorrichtung umfassen, die zwischen wenigstens zwei verschiedenen Schaltstellungen umschaltbar ist, wobei ein Umschalten der Schaltvorrichtung von einer Schaltstellung in eine andere Schaltstellung eine Umkehr der Richtung einer Bewegung des verstellbaren Elements bewirkt. Eine solche Möglichkeit der Drehrichtungsumkehr erlaubt eine besonders schnelle Einstellung einer gewünschten Position des verstellbaren Elements. So kann, wenn durch eine Steuerung eine gewünschte Position des Elements bestimmt wird, gleichzeitig bestimmt werden, in welcher Richtung das Element bewegt werden muss, um einen minimalen und/oder für das Gesamtsystem unkritischen Weg zur gewünschten Position zurückzulegen. Die Bewegungsrichtung des Elements kann dann entsprechend eingestellt werden.

Die Schaltvorrichtung kann ein Zwischenglied umfassen, welches an einem um eine Drehachse schwenkbar gelagerten Schwenkarm drehbar gelagert ist, wobei das Zwischenglied in einer ersten Schwenkstellung des Schwenkarms mit einem ersten Wechselglied eines Getriebes und in einer zweiten Schwenkstellung des Schwenkarms mit einem zweiten Wechselglied des Getriebes kämmt.

Die Schaltvorrichtung kann einen elektromechanischen Schaltantrieb umfassen, der z.B. einen oder mehrere Elektromagnete aufweist. Die Schaltvorrichtung für die Richtungsumkehr kann auch einen Schiebeantrieb mit einem verschiebbaren Organ umfassen, wobei das verschiebbare Organ einerseits bei unbetätigtem Schiebeantrieb von einer beim Rotieren der Einheit auftretenden Fliehkraft in eine erste Stellung gedrängt und dort gehalten wird und andererseits durch Betätigung des Schiebeantriebs gegen die Fliehkraft in eine von der ersten Stellung verschiedene zweite Stellung verschiebbar und dort gegebenenfalls mechanisch arretierbar ist.

Gemäß einer vorteilhaften Ausführungsform ist ein Haltemechanismus vorgesehen, der zwischen einer Haltestellung und einer Freigabestellung umstellbar ist, wobei der Haltemechanismus in der Haltestellung das verstellbare Element in der Stelleinrichtung arretiert und in der Freigabestellung eine Bewegung des verstellbaren Elements ermöglicht. Durch einen solchen zusätzlichen Haltemechanismus kann gewährleistet werden, dass das verstellbare Element gegen eine unerwünschte Bewegung gesichert ist, wenn gerade keine Verstellung des Elements durchgeführt wird, z.B. während einer Drehbeschleunigung der rotierenden Einheit im Zuge eines Hochfahrens der Einheit auf die Nenndrehzahl. Der Haltemechanismus kann von einer Steuerung ansteuerbar sein, die den Haltemechanismus immer dann in die Haltestellung stellt, wenn gerade kein Stellvorgang durchgeführt wird.

Vorteilhafterweise kann ein Schwinger des Schwingungsantriebs als Schwinghebel ausgebildet sein, der eine Längsachse aufweist, die in einer Ruhestellung des Schwinghebels im Wesentlichen radial zu einer Rotationsachse der Stelleinrichtung orientiert ist. Dadurch kann bewirkt werden, dass die beim Rotieren der Einheit auftretenden Fliehkräfte in Längsrichtung des in seiner Ruhestellung befindlichen Schwinghebels wirken.

Die erfindungsgemäße Stelleinrichtung kann als in eine rotierende Einheit integrierbarer Wuchtkopf ausgebildet sein. Die Stelleinrichtung kann aber auch einen Wuchtring bilden, der ausgebildet ist, um die rotierende Einheit oder einen Bestandteil davon mittenfrei zu umschließen. Die Stelleinrichtung kann dabei zum Beispiel ringförmig ausgebildet sein. Grundsätzlich ist es auch möglich, derartige Stelleinrichtungen in Form von Ringsegmenten, die beispielsweise eine etwa C-förmige Struktur aufweisen, vorzusehen.

Der Schwingungsantrieb ist bevorzugt einem rotierenden Teil der Stelleinrichtung zugeordnet. Bei einer Ausbildung der Stelleinrichtung als mittenfreier Wuchtring mit zumindest einer verstellbaren Wuchtmasse muss der Antrieb zwangsläufig beabstandet zu der in der freien Mitte des Wuchtrings gelegenen Rotationsachse der rotierenden Einheit angeordnet werden. Während des Betriebs der rotierenden Einheit, um die herum der Wuchtring angeordnet ist, können dabei erhebliche Beschleunigungs- und Fliehkräfte auf den Antrieb einwirken. Der Schwingungsantrieb gewährleistet dabei auch bei hohen Drehzahlen des rotierenden Teils eine zuverlässige Verstellbarkeit der verstellbaren Elemente, sodass ein automatisches Verstellen auch bei hohen Drehzahlen ermöglicht wird. Insbesondere kann der erfindungsgemäße Schwingungsantrieb problemlos in radialen Entfernungen von der Rotationsachse der rotierenden Einheit von 5 bis 15 cm und mehr angeordnet werden.

Eine Ansteuerung und Energieversorgung des Schwingungsantriebs und/oder eine Kommunikation mit dem Schwingungsantrieb kann über eine berührungslos arbeitende Übertragungseinrichtung erfolgen. Eine solche Übertragungseinrichtung kann den Schwingungsantrieb mit einer Steuerungseinrichtung und/oder einer Energieversorgungseinrichtung verbinden, wobei die Steuerungseinrichtung und/oder die Energieversorgungseinrichtung bevorzugt als "externe" Komponenten ausgebildet sind, d.h. der stationären Seite zugeordnet und somit nicht Bestandteil des rotierenden Teils der Stelleinrichtung sind.

Gemäß einer vorteilhaften Ausführungsform sind mehrere, vorzugsweise zwei, verstellbare Elemente vorgesehen, denen jeweils ein wie vorstehend beschriebener Schwingungsantrieb zugeordnet ist, wobei bevorzugt die Schwingungsantriebe baugleich ausgebildet und/oder unabhängig voneinander betreibbar sind. In diesem Fall sind bevorzugt zwei Schwingungsantriebe bezogen auf eine Rotationsachse des Schwingungsantriebs einander diametral gegenüberliegend angeordnet. Auf diese Weise kann eine durch die Masse der Schwingungsantriebe in der rotierenden Einheit hervorgerufene Unwucht weitgehend vermieden werden.

Es können auch wenigstens zwei verstellbare Elemente vorgesehen sein, die demselben Schwingungsantrieb zugeordnet sind, wobei der Schwingungsantrieb einen Schwinger und zwei Umsetzvorrichtungen umfasst und jeder der zwei Umsetzvorrichtungen die Schwingbewegung des Schwingers in eine gerichtete Verstellbewegung eines der Elemente umsetzt. Insbesondere kann dabei eine Umsetzvorrichtung im Wesentlichen nur während einer Bewegung des Schwingers in eine erste Richtung und die andere Umsetzvorrichtung im Wesentlichen nur während einer Bewegung des Schwingers in eine der ersten Richtung entgegen gesetzte zweite Richtung antriebswirksam mit dem jeweils zugeordneten Element gekoppelt sein. Hierzu kann zum Beispiel ein Schwinger zwei gegenüberliegend angeordnete Antriebsklinken umfassen, die jeweils einem von zwei auf gegenüberliegenden Seiten des Schwingers angeordneten Klinkenorganen zugeordnet sind, wobei jedes Klinkenorgan mit einem der zwei Elemente antriebswirksam in Verbindung steht. Im Rahmen der Erfindung können aber auch beide Klinkenorgane mit ein und demselben verstellbaren Element antriebswirksam in Verbindung stehen, sodass die Bewegungen des Schwingers sowohl in eine erste als auch in eine der ersten Richtung entgegen gesetzte zweite Richtung in eine Bewegung des Elements in eine gemeinsame Richtung umgesetzt werden.

Die Erfindung betrifft außerdem ein Stellsystem, insbesondere ein Wuchtsystem, für rotierende Einheiten mit wenigstens einer in einer rotierenden Einheit integrierten, an eine rotierende Einheit angebauten und/oder um eine rotierende Einheit herum montierten, wie vorstehend beschriebenen Stelleinrichtung. Die vorstehend in Bezug auf die Stelleinrichtung beschriebenen vorteilhaften Ausführungsformen und Vorteile der Erfindung gelten dabei entsprechend.

Die Erfindung betrifft ferner eine Werkzeugmaschine mit wenigstens einer wie vorstehend beschriebenen Stelleinrichtung oder mit einem wie vorstehend beschriebenen Stellsystem. Auch hier gelten die vorstehend in Bezug auf die Stelleinrichtung bzw. das Stellsystem genannten vorteilhaften Ausführungsformen und Vorteile der Erfindung entsprechend.

Insbesondere in bestimmten Anwendungsfällen ist es möglich, dass in die Wuchteinrichtung weitere Komponenten bzw. Bauteile bzw. Systeme, insbesondere zusätzliche Sensorik, integriert werden. Hierbei kann es sich beispielsweise um AE-Sensoren (AE = "Acoustic Emission"), um Prozesseinrichtungen jedweder Art oder um Temperatursensoren handeln. Dies ist insbesondere dann sinnvoll, wenn für diese zusätzlichen Einrichtungen an anderer Stelle der Gesamteinrichtung kein oder nur wenig Bauraum zur Verfügung steht, wenn eine Kommunikation von und zu der zusätzlichen Einrichtung beispielsweise aufgrund zu niedriger Signalpegel an anderen Orten der Gesamteinrichtung schwierig oder unmöglich wäre oder wenn bewusst der Zugang zu der zusätzlichen Einrichtung erschwert werden soll.

Gerade einer Integration von AE-Sensoren in Wuchteinrichtungen, die an sich grundsätzlich bekannt ist, kommt derzeit eine immer größere Bedeutung zu, da erkannt wurde, dass die Erfassung und Auswertung insbesondere von an schnell laufenden Spindeln von Werkzeugmaschinen entstehender "Acoustic Emission" den Betrieb derartiger Spindeln deutlich verbessern kann. Insbesondere ist es möglich, einen verschleißfreien, zweigeteilten AE-Sensor zu verwenden und in eine elektromechanische Wuchteinrichtung zu integrieren. Der Sensor besteht aus einem rotierenden und einem feststehenden Teil, wobei der rotierende Teil des Sensors in die Wuchteinrichtung integriert werden kann. Die während des Betriebs der rotierenden Einheit, insbesondere der Spindel einer Werkzeugmaschine, entstehenden AE-Signale werden mit Hilfe des rotierenden Sensorteils detektiert, zunächst berührungslos vom rotierenden Teil auf den stationären Teil des AE-Sensors und von dort weiter zu einer Auswerteelektronik übertragen, welche die AE-Signale verarbeitet und auswertet, woraufhin dann entsprechend einer hinterlegten Handlungslogik auf die Steuerung der Spindel bzw. der betreffenden Bearbeitungsmaschine eingewirkt werden kann. Besonders vorteilhaft ist, dass die Integration einer solchen zusätzlichen Sensorik in die Wuchteinrichtung, insbesondere in einen Wuchtkopf oder in einen Wuchtring, die erfindungsgemäße Verstellung der Wuchtgewichte mittels des hier beschriebenen Schwingungsantriebs in keiner Weise beeinträchtigt.

Des Weiteren ist es grundsätzlich bekannt, eine Integration von Prozesseinrichtungen in einen Wuchtkopf oder einen Wuchtring für rotierende Einheiten, insbesondere für Spindeln von Werkzeugmaschinen, vorzunehmen. Eine solche Prozesseinrichtung kann insbesondere dazu ausgebildet sein, zumindest einen Teil eines die Wuchteinrichtung betreffenden Auswuchtprozesses durchzuführen. Zusätzlich kann die Prozesseinrichtung dazu ausgebildet sein, Daten und/oder Signale zu erfassen, zu verarbeiten und/oder zu speichern, und/oder Prozesse auszuführen, die nicht den Auswuchtprozess betreffen. Die Erfindung schafft eine besonders vorteilhafte Möglichkeit, derartige Prozesseinrichtungen in eine Wuchteinrichtung zu integrieren, die einen oder mehrere Schwingungsantriebe umfasst, wie sie hier beschrieben werden.

Die obigen Ausführungen zeigen, dass der erfindungsgemäße Schwingungsantrieb besonders vorteilhaft auf dem Gebiet des Auswuchtens von schnell laufenden Spindeln von Werkzeugmaschinen eingesetzt werden kann, wo Zusatzfunktionen wie die Integration von zusätzlichen Einrichtungen zunehmend nachgefragt werden.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine als Wuchteinrichtung ausgebildete erfindungsgemäße Stelleinrichtung in Explosionsdarstellung;
- Fig. 2: eine schematische Ansicht eines Teils der Wuchteinrichtung von Fig. 1; und
- Fig. 3: eine vergrößerte Darstellung des Ausschnitts A von Fig. 2.

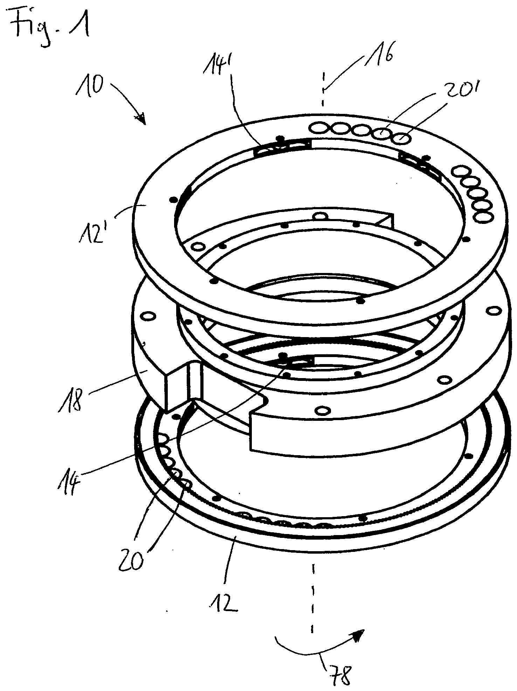

Fig. 1 zeigt eine Explosionsdarstellung einer Wuchteinrichtung 10, die als mittenfreier Wuchtring ausgebildet ist. Die Wuchteinrichtung 10 umfasst zwei als Massenringe ausgebildete Wuchtmassen 12, 12', die jeweils mit Kugellagern 14, 14' auf einem gemeinsamen Träger 18 um eine gemeinsame Drehachse 16 relativ zu dem Träger 18 drehbar gelagert und dabei in axialer Richtung voneinander beabstandet sind. Die ansonsten rotationssymmetrisch zur Drehachse 16 ausgebildeten Wuchtmassen 12, 12' weisen in einem Winkelabschnitt Aussparungen 20, 20' auf, durch die gezielt ein bestimmtes Übergewicht der Wuchtmassen 12, 12' erzeugt wird, sodass zum Erregen oder Kompensieren einer Unwucht des Gesamtsystems durch entsprechendes Ausrichten der Wuchtmassen 12, 12' ein bestimmter resultierender Wuchtvektor der Wuchtmassen 12, 12' eingestellt werden kann. Im Rahmen der Erfindung ist es bevorzugt, wenn die Geschwindigkeit, mit der die Wuchtmassen 12, 12' bewegbar sind, so hoch ist, dass für einen vollen Umlauf einer Wuchtmasse 12, 12' nur etwa 60 bis 90 Sekunden benötigt werden. Hierdurch kann eine Zeit, die zur Einstellung eines gewünschten Wuchtvektors benötigt wird, gering gehalten werden. In modernen Produktionsprozessen muss üblicherweise bei jedem Wechsel des mit einer Werkzeugspindel verwendeten Werkzeugs das System neu ausgewuchtet werden. Da in automatisierten Produktionsprozessen üblicherweise sehr häufige und automatische Werkzeugwechsel notwendig sind, können kurze Wuchtzeiten ausschlaggebend für die Wirtschaftlichkeit eines solchen Produktionsprozesses sein.

Die Wuchteinrichtung 10 kann um eine rotierende Einheit, z.B. eine eine Schleifscheibe tragende Spindel einer Werkzeugmaschine, herum montiert werden, wobei die Rotationsachse der rotierenden Einheit bevorzugt mit der Drehachse 16 zumindest näherungsweise zusammenfällt.

Zweckmäßigerweise können in die Aussparungen 20, 20' auch zusätzliche, in Fig. 1 nicht dargestellte Massekörper eingesetzt werden, um die durch die Wuchtmassen 12, 12' jeweils hervorgerufenen Wuchtvektoren an die jeweilige Anwendung geeignet anzupassen.

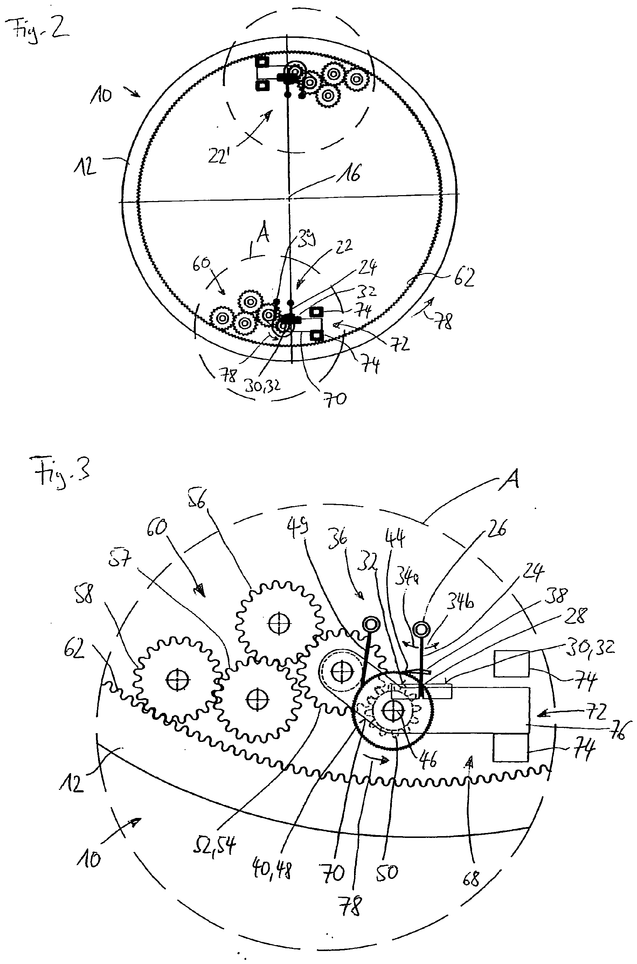

Jeder Wuchtmasse 12, 12' ist ein auf dem Träger 18 angeordneter Schwingungsantrieb 22, 22' (siehe Fig. 2 und 3) zugeordnet, wobei die Schwingungsantriebe 22, 22' baugleich ausgebildet und unabhängig voneinander betreibbar sind.

Wie in Fig. 2 gezeigt, sind die beiden Schwingungsantriebe 22, 22' in einer möglichen Ausgangsstellung bezogen auf die Drehachse 16 einander diametral gegenüberliegend angeordnet. Der Einfachheit halber sind die beiden Schwingungsantriebe 22, 22' dabei in Fig. 2 in derselben Ebene senkrecht zur Drehachse 16 gezeigt, als wären sie derselben Wuchtmasse 12 zugeordnet. Abweichend von dieser vereinfachten Darstellung in Fig. 2 sind die beiden Schwingungsantriebe 22, 22' jedoch tatsächlich in Richtung der Drehachse 16 zueinander versetzt angeordnet, wobei der Schwingungsantrieb 22 weiter unten angeordnet und der unteren Wuchtmasse 12 zugeordnet ist und diese antreibt und der Schwingungsantrieb 22' weiter oben angeordnet und der oberen Wuchtmasse 12' zugeordnet ist und diese antreibt. Im Rahmen der Erfindung wäre es aber prinzipiell auch denkbar, tatsächlich mehrere Schwingungsantriebe 22, 22' derselben Wuchtmasse zuzuordnen, wobei die Schwingungsantriebe 22, 22' miteinander synchronisiert sind und die jeweilige Wuchtmasse gemeinsam antreiben. Die Schwingungsantriebe 22, 22' sind in Fig. 2 bzw. 3 der besseren Erkennbarkeit halber im Vergleich zu der Wuchtmasse 12 bzw. 12' vergrößert dargestellt und können in der Realität auch problemlos in einem deutlich kleineren als dem dargestellten Bauraum realisiert werden.

Der Aufbau des Schwingungsantriebs 22 ist in Fig. 2 und 3 genauer gezeigt. Der Schwingungsantrieb 22 umfasst einen als Schwinghebel ausgebildeten Schwinger 24, der in einem Abschnitt 26 fest mit dem in Fig. 2 und 3 nicht dargestellten Träger 18 (Fig. 1) verbunden ist. Ausgehend von dem Abschnitt 26 erstreckt sich ein zweiter, freier Abschnitt 28 des Schwingers 24 in einer Richtung radial zur Drehachse 16. Ein magnetischer oder magnetisierbarer Teil des Abschnitts 28 ist zwischen zwei Elektromagneten 32 einer Anregungseinheit 30 angeordnet. Die Elektromagnete 32 sind ausgebildet, um im Bereich des Schwingers 24 ein elektromagnetisches Wechselfeld zu erzeugen, das abwechselnd in Richtung des Pfeils 34a und in Richtung des Pfeils 34b gerichtet ist. Dadurch kann der Schwinger 24 aus seiner Ruheposition in Richtung der Pfeile 34a, 34b ausgelenkt und dazu angeregt werden, in Richtung des Doppelpfeils 34, d.h. im Wesentlichen senkrecht zu seiner Längsachse, hin und her zu schwingen.

Die Energieversorgung der Anregungseinheit 30 mit den Elektromagneten 32 erfolgt durch eine Energieversorgungseinheit, die auf einem in Fig. 1 bis 3 nicht dargestellten stationären Teil der Wuchteinrichtung angeordnet ist und über eine ebenfalls nicht dargestellte berührungslos arbeitende Übertragungseinrichtung mit den Elektromagneten 32 gekoppelt ist. Bevorzugt ist die Frequenz des Versorgungssignals, mit dem die Elektromagnete 32 beaufschlagt werden, elektronisch einstellbar. Eine Frequenz kann dabei so angepasst sein, dass Resonanzen mit einer rotierenden Einheit und anderen Komponenten der Wuchteinrichtung 10 vermieden werden. Die Übertragungseinrichtung kann außerdem zur gleichzeitigen Übertragung mehrerer Versorgungs- und/oder Kommunikationssignale für verschiedene Elemente der Wuchteinrichtung 10 ausgebildet sein, die zur Vermeidung gegenseitiger Störungen unterschiedliche Frequenzen aufweisen.

Der Schwingungsantrieb 22 umfasst eine Umsetzvorrichtung 36 mit einer an dem Schwinger 24, insbesondere schwenkbar, angebrachten Antriebsklinke 38. Die Antriebsklinke 38 umfasst einen Klinkenabschnitt 44 zur Kopplung der Antriebsklinke 38 mit einem Klinkenorgan 40, das um eine Drehachse 46 drehbar an dem Träger 18 (Fig. 1) gelagert ist.

Das Klinkenorgan 40 weist an seiner radialen Außenseite eine Klinkenverzahnung 48 mit mehreren Zähnen auf, wobei jeder Zahn eine näherungsweise radial zur Drehachse 46 verlaufende Angriffsfläche aufweist sowie eine Übergangsfläche, die die Angriffsflächen zweier aufeinander folgender Zähne miteinander verbindet. Der Schwinger 24 ist dabei über die Antriebsklinke 38 im Wesentlichen nur in einer ersten Bewegungsrichtung 34a antriebswirksam mit dem Klinkenorgan 40 gekoppelt und kann sich in einer zweiten Bewegungsrichtung 34b im Wesentlichen unbeeinflusst von dem Klinkenorgan 40 zurückbewegen, sodass eine kontinuierliche Bewegung des Klinkenorgans 40 in eine Richtung 78 erfolgt.

Die Umsetzvorrichtung 36 umfasst eine Sperrklinke 49, die in die Klinkenverzahnung 48 eingreift. Die Sperrklinke 49 ist dabei mit ihrer Längsachse radial zur Drehachse 16 ausgerichtet.

Das Klinkenorgan 40 ist mit einer weiteren Verzahnung 50 drehfest verbunden, die in Richtung der Drehachse 46 relativ zu der Klinkenverzahnung 48 versetzt angeordnet ist und die mit einer Verzahnung 52 eines als Zahnrad ausgebildeten Zwischenglieds 54 kämmt. Das Zwischenglied 54 kämmt mit seiner Verzahnung 52 mit einem von zwei Wechselgliedern 56, 57, die ebenfalls jeweils als Zahnrad ausgebildet sind. Das Wechselglied 57 kämmt mit einem Abtriebszahnrad 58, welches wiederum mit einer an einer Innenseite der Wuchtmasse 12 ausgebildeten Verzahnung 62 der Wuchtmasse 12 kämmt. Die Verzahnung 50, das Zwischenglied 54, die Wechselglieder 56, 57 und das Abtriebszahnrad 58 bilden zusammen ein Getriebe 60.

Der Antrieb 22 umfasst eine Schaltvorrichtung 68, die eine Drehrichtungsumkehr der Wuchtmasse 12 ermöglicht. Das Zwischenglied 54 ist dazu an einem Schwenkarm 70 der Schaltvorrichtung 68 drehbar gelagert, wobei der Schwenkarm 70 um die Drehachse 46 schwenkbar an dem Träger 18 (Fig. 1) gelagert ist. In der in Fig. 2 und 3 dargestellten Schwenkstellung des Schwenkarms 70 kämmt das Zwischenglied 54 mit dem ersten Wechselglied 56. Der Schwenkarm 70 ist über einen elektromechanischen Schaltantrieb 72 von der in Fig. 2 und 3 gezeigten Schwenkstellung in eine zweite Schwenkstellung umschaltbar, in der das Zwischenglied 54 nicht mehr mit dem ersten Wechselglied 56, sondern stattdessen mit dem zweiten Wechselglied 57 kämmt. Auf diese Weise kann eine Richtungsumkehr der Drehrichtung der Wuchtmasse 12 bewirkt werden. Der Schaltantrieb 72 umfasst zwei Elektromagnete 74, die mit einem magnetischen oder magnetisierbaren Abschnitt 76 des Schwenkarms 70 elektromagnetisch koppelbar sind.

Die Wuchteinrichtung 10 kann einen trägerseitig angebrachten, in Fig. 1 bis 3 nicht dargestellten Haltemechanismus umfassen, der zwischen einer Haltestellung, in der eine Bewegung der Wuchtmasse 12 blockiert wird, und einer Freigabestellung, in der eine Bewegung der Wuchtmasse 12 durch den Schwingungsantrieb 22 ermöglicht wird, umstellbar ist. Ein solcher Haltemechanismus kann insbesondere ausgebildet sein, um in der Haltestellung mit einem Element des Getriebes 60 blockierend in Eingriff zu gelangen. Ebenso kann der Haltemechanismus direkt an der Wuchtmasse 12 angreifen. Bevorzugt ist der Haltemechanismus auch über eine berührungslose Übertragungseinrichtung ansteuerbar und umfasst einen oder mehrere Elektromagnete. Es kann auch vorgesehen sein, dass der Schaltantrieb 72 für das Zwischenglied 54 über eine dritte Schaltstellung verfügt, in der das Zwischenglied 54 sowohl mit dem ersten Wechselglied 56 als auch mit dem zweiten Wechselglied 57 in Eingriff steht und somit ein Drehen des Zwischenglieds 54 und der Wechselglieder 56, 57 blockiert.

Nachfolgend wird die Funktionsweise des Schwingungsantriebs 22 in Bezug auf die Fig. 2 und 3 näher erläutert.

Während des Betriebs des Schwingungsantriebs 22 werden die Elektromagnete 32 über die berührungslose Übertragungseinrichtung mit einem elektrischen Wechselstrom beaufschlagt, um im Bereich des Schwingers 24 ein elektromagnetisches Wechselfeld zu erzeugen. Durch das elektromagnetische Wechselfeld wird der Schwinger 24 zu einer Schwingbewegung in Richtung des Doppelpfeils 34 angeregt.

Während einer einzelnen Schwingung bewegt sich der Schwinger 24 in Richtung des Pfeils 34a, bis er einen ersten Umkehrpunkt erreicht, und schwingt dann zurück in Richtung des Pfeils 34b, bis er einen zweiten Umkehrpunkt erreicht. Im Zuge der Bewegung in Richtung des Pfeils 34a greift der Klinkenabschnitt 44 der Antriebsklinke 38 an dem Klinkenorgan 40 an. Dabei bildet der Klinkenabschnitt 44 mit der Angriffsfläche eines Zahns der Klinkenverzahnung 48 eine in Drehrichtung um die Drehachse 46 wirksame Hinterschneidung und dreht so das Klinkenorgan 40 in Richtung des Pfeils 78. Im Zuge dieser Bewegung wird das Klinkenorgan 40 in Richtung des Pfeils 78 um einen Zahn weiter gedreht.

Die Sperrklinke 49, die am Anfang dieser Bewegung mit einem Zahn des Klinkenorgans 40 in Eingriff steht und ein Bewegen des Klinkenorgans 40 in einer dem Pfeil 78 entgegen gesetzten Richtung verhindert, gerät am Ende dieser Bewegung mit dem in Drehrichtung nächsten Zahn des Klinkenorgans 40 in Eingriff und verhindert wiederum ein Zurückdrehen des Klinkenorgans 40. Somit kann der Schwinger 24 in Richtung des Pfeils 34b zurück ausgelenkt werden, ohne dass das Klinkenrad 40 zurück gedreht wird. Bei der nächsten Schwingung greift die Antriebsklinke 38 wieder an dem nächsten Zahn an und schiebt das Klinkenorgan 40 wieder um einen Zahn weiter. Auf diese Weise erfolgt eine stetige Fortbewegung des Klinkenorgans 40 in Richtung des Pfeils 78. Diese Drehbewegung des Klinkenorgans 40 wird durch das Getriebe 60 in der in Fig. 2 und 3 gezeigten Schaltstellung des Schwenkarms 70 in eine Drehbewegung der Wuchtmasse 12 ebenfalls in Richtung des Pfeils 78 übertragen.

Durch Umschalten des Schwenkarms 70 über die Schaltvorrichtung 68 kann die Drehrichtung der Wuchtmasse 12 in Bezug auf die Drehrichtung des Klinkenorgans 40 durch eine elektronische Steuerung geeignet umgekehrt werden.

### Bezugszeichenliste

- 10: Wuchteinrichtung
- 12, 12': Wuchtmasse
- 14, 14': Kugellager
- 16: Drehachse
- 18: Träger
- 20: Aussparung
- 22, 22': Schwingungsantrieb
- 24: Schwinger
- 26, 28: Abschnitt
- 30: Anregungseinheit
- 32: Elektromagnet
- 34; 34a,b: Pfeil; Doppelpfeil
- 36: Umsetzvorrichtung
- 38: Antriebsklinke
- 40: Klinkenorgan
- 44: Klinkenabschnitt
- 46: Drehachse
- 48: Klinkenverzahnung
- 49: Sperrklinke
- 50, 52: Verzahnung
- 54: Zwischenglied
- 56, 57: Wechselglied
- 58: Abtriebszahnrad
- 60: Getriebe
- 62: Verzahnung
- 68: Schaltvorrichtung
- 70: Schwenkarm
- 72: Schaltantrieb
- 74: Elektromagnet
- 76: Abschnitt
- 78: Pfeil

## Patentansprüche

1. Stelleinrichtung (10) für rotierende Einheiten, insbesondere für Spindeln von Werkzeugmaschinen, mit zumindest einem verstellbaren Element (12, 12') und einem Antrieb zum Verstellen des Elements (12, 12'),
wobei der Antrieb einen elektromechanischen Schwingungsantrieb (22, 22') umfasst,
**dadurch gekennzeichnet, dass**
der Schwingungsantrieb (22, 22') eine elektrische Anregungseinheit (30) aufweist, die zumindest einen Elektromagneten (32) umfasst, dass ein Schwinger (24) vorgesehen ist, der zur magnetischen Kopplung mit dem Elektromagneten (32) ein magnetisches oder magnetisierbares Material aufweist und der durch die Anregungseinheit (30) zu einer Schwingbewegung anregbar ist, und dass eine Umsetzvorrichtung (36) vorgesehen ist, durch die die Schwingbewegung des Schwingers (24) in eine gerichtete Verstellbewegung des Elements (12, 12') umsetzbar ist.

2. Stelleinrichtung nach Anspruch 1,
**dadurch gekennzeichnet, dass**
die Stelleinrichtung (10) durch eine Wuchteinrichtung, insbesondere einen Wuchtring (10) oder einen Wuchtkopf, gebildet ist, und dass das zumindest eine verstellbare Element (12, 12') durch eine verstellbare Wuchtmasse (12, 12') gebildet ist.

3. Stelleinrichtung nach Anspruch 1 oder 2,
**dadurch gekennzeichnet, dass**
die Anregungseinheit (30) wenigstens zwei Elektromagnete (32) umfasst und der Schwinger (24) zumindest bereichsweise zwischen den zwei Elektromagneten (32) angeordnet ist.

4. Stelleinrichtung nach einem der vorhergehenden Ansprüche,
**dadurch gekennzeichnet, dass**
die Umsetzvorrichtung (36) ein um eine Drehachse (46) drehbar gelagertes Organ (40) umfasst und dazu ausgebildet ist, die Schwingbewegung eines Schwingers (24) in eine Drehbewegung des Organs (40) umzusetzen, wobei insbesondere das drehbar gelagerte Organ als Klinkenorgan (40) ausgebildet ist und die Umsetzvorrichtung (36) eine Antriebsklinke (38) umfasst, die einen mit dem Schwinger (24) gekoppelten Abschnitt einerseits und einen Klinkenabschnitt (44) andererseits aufweist, wobei der Klinkenabschnitt (44) im Zuge einer Schwingbewegung des Schwingers (24) an dem Klinkenorgan (40) angreift und eine in eine erste Drehrichtung (78) um die Drehachse (46) wirkende Kraft auf das Klinkenorgan (40) ausübt, wobei insbesondere die Umsetzvorrichtung (36) eine Sperrklinke (49) umfasst, die ein Drehen des Klinkenorgans (40) in eine der ersten Drehrichtung (78) entgegen gesetzte zweite Drehrichtung blockiert.

5. Stelleinrichtung nach einem der vorhergehenden Ansprüche,
**dadurch gekennzeichnet, dass**
der Antrieb ein Getriebe (60), insbesondere ein Zahnradgetriebe, umfasst, welches zwischen einer Umsetzvorrichtung (36) und dem Element (12, 12') angeordnet ist und eine Bewegung der Umsetzvorrichtung (36) in eine Bewegung des Elements (12, 12') überträgt.

6. Stelleinrichtung nach einem der vorhergehenden Ansprüche,
**dadurch gekennzeichnet, dass**
der Antrieb eine Schaltvorrichtung (68) umfasst, die zwischen wenigstens zwei verschiedenen Schaltstellungen umschaltbar ist, wobei ein Umschalten der Schaltvorrichtung (68) von einer Schaltstellung in eine andere Schaltstellung eine Umkehr der Richtung einer Bewegung des Elements (12, 12') bewirkt.

7. Stelleinrichtung nach Anspruch 6,
**dadurch gekennzeichnet, dass**
die Schaltvorrichtung (68) ein Zwischenglied (54) umfasst, welches an einem um eine Drehachse (46) schwenkbar gelagerten Schwenkarm (70) drehbar gelagert ist, wobei das Zwischenglied (54) in einer ersten Schwenkstellung des Schwenkarms mit einem ersten Wechselglied (56) eines Getriebes (60) und in einer zweiten Schwenkstellung des Schwenkarms (70) mit einem zweiten Wechselglied (57) eines Getriebes (60) kämmt, und/oder dass die Schaltvorrichtung (68) einen elektromechanischen Schaltantrieb (72) umfasst, der insbesondere zumindest einen Elektromagneten (74) umfasst.

8. Stelleinrichtung nach einem der vorhergehenden Ansprüche,
**dadurch gekennzeichnet, dass**
ein Haltemechanismus vorgesehen ist, der zwischen einer Haltestellung und einer Freigabestellung umstellbar ist, wobei der Haltemechanismus in der Haltestellung das Element (12, 12') arretiert und in der Freigabestellung eine Bewegung des Elements (12, 12') ermöglicht.

9. Stelleinrichtung nach einem der vorhergehenden Ansprüche,
**dadurch gekennzeichnet, dass**
der Schwinger (24) als Schwinghebel ausgebildet ist, der insbesondere eine Längsachse aufweist, die in einer Ruhestellung des Schwinghebels im Wesentlichen radial zu einer Rotationsachse (16) der Stelleinrichtung (10) orientiert ist.

10. Stelleinrichtung nach einem der vorhergehenden Ansprüche,
**dadurch gekennzeichnet, dass**
die Stelleinrichtung (10) ringförmig ausgebildet ist, und/oder dass der Schwingungsantrieb (22, 22') einem rotierenden Teil der Stelleinrichtung (10) zugeordnet ist.

11. Stelleinrichtung nach einem der vorhergehenden Ansprüche,
**dadurch gekennzeichnet, dass**
mehrere, vorzugsweise zwei, verstellbare Elemente (12, 12') vorgesehen sind, denen jeweils ein Schwingungsantrieb (22, 22') zugeordnet ist, wobei bevorzugt die Schwingungsantriebe (22, 22') baugleich ausgebildet und/oder unabhängig voneinander betreibbar sind, und/oder dass zumindest zwei verstellbare Elemente (12, 12') vorgesehen sind, die demselben Schwingungsantrieb zugeordnet sind, wobei der Schwingungsantrieb einen Schwinger (24) und zwei Umsetzvorrichtungen (36) umfasst und jede der zwei Umsetzvorrichtungen (36) die Schwingbewegung des Schwingers (24) in eine gerichtete Verstellbewegung eines der zwei Elemente (12, 12') umsetzt, wobei insbesondere eine Umsetzvorrichtung (36) im Wesentlichen nur während einer Bewegung des Schwingers (24) in eine erste Richtung und die andere Umsetzvorrichtung (36) im Wesentlichen nur während einer Bewegung des Schwingers (24) in eine von der ersten Richtung verschiedene zweite Richtung antriebswirksam mit dem jeweils zugeordneten Element (12, 12') gekoppelt ist.

12. Stellsystem für rotierende Einheiten mit wenigstens einer in eine rotierende Einheit integrierten, an eine rotierende Einheit angebauten und/oder um eine rotierende Einheit herum montierten Stelleinrichtung (10) nach einem der vorhergehenden Ansprüche.

13. Werkzeugmaschine mit wenigstens einer Stelleinrichtung (10) nach einem der Ansprüche 1 bis 11 oder mit einem Stellsystem nach Anspruch 12.

## Claims

1. An adjustment device (10) for rotating units, in particular for spindles of machine tools, having at least one adjustable element (12, 12') and having a drive for adjusting the element (12, 12'), wherein the drive comprises an electromechanical oscillation drive (22, 22'),
**characterized in that**
the oscillation drive (22, 22') has an electrical excitation unit (30) which comprises at least one electromagnet (32); **in that** an oscillator (24) is provided which has a magnetic or magnetizable material for a magnetic coupling with the electromagnet (32) and which can be excited by the excitation unit (30) to make an oscillatory movement; and **in that** a conversion apparatus (36) is provided by which the oscillatory movement of the oscillator (24) can be converted into a directed adjustment movement of the element (12, 12').

2. An adjustment device in accordance with claim 1,
**characterized in that**
the adjustment device (10) is formed by a balancing device, in particular by a balancing ring (10) or by a balancing head; and **in that** at least one adjustable element (12, 12') is formed by an adjustable balancing mass (12, 12').

3. An adjustment device in accordance with claim 1 or claim 2,
**characterized in that**
the excitation unit (30) comprises at least two electromagnets (32) and the oscillator (24) is at least partly arranged between the two electromagnets (32).

4. An adjustment device in accordance with any one of the preceding claims,
**characterized in that**
the conversion apparatus (36) comprises a member (40) rotatably supported about an axis of rotation (46) and is configured to convert the oscillatory movement of an oscillator (24) into a rotational movement of the member (40), with the rotatably supported member in particular being configured as a ratchet member (40) and the conversion apparatus (36) comprising a drive ratchet (38) which has a section coupled to the oscillator (24), on the one hand, and a ratchet section (44), on the other hand, with the ratchet section (44) engaging at the ratchet member (40) in the course of an oscillatory movement of the oscillator (24) and exerting a force onto the ratchet member (40), said force acting about the axis of rotation (46) in a first direction of rotation (78), with the conversion apparatus (36) in particular comprising a pawl (49) which blocks a rotation of the ratchet member (40) in a second direction of rotation opposite to the first direction of rotation (78).

5. An adjustment device in accordance with any one of the preceding claims,
**characterized in that**
the drive comprises a transmission (60), in particular a toothed wheel transmission, which is arranged between a conversion apparatus (36) and the element (12, 12') and which converts a movement of the conversion apparatus (36) into a movement of the element (12, 12').

6. An adjustment device in accordance with any one of the preceding claims,
**characterized in that**
the drive comprises a switching apparatus (68) which can be switched over between at least two different switch positions, with a switching over of the switching apparatus (68) from one switch position into another switch position effecting a reversal of the direction of a movement of the element (12, 12').

7. An adjustment device in accordance with claim 6,
**characterized in that**
the switching apparatus (68) comprises an intermediate member (54) which is rotatably supported at a pivot arm (70) pivotably supported about an axis of rotation (46), with the intermediate member (54) meshing with a first exchange member (56) of a transmission (60) in a first pivot position of the pivot arm and meshing with a second exchange member (57) of a transmission (60) in a second pivot position of the pivot arm (70); and/or **in that** the switching apparatus (68) comprises an electromechanical switching drive (72) which in particular comprises at least one electromagnet (74).

8. An adjustment device in accordance with any one of the preceding claims,
**characterized in that**
a holding mechanism is provided which can be switched over between a holding position and a release position, with the holding mechanism locking the element (12, 12') in the holding position and allowing a movement of the element (12, 12') in the release position.

9. An adjustment device in accordance with any one of the preceding claims,
**characterized in that**
the oscillator (24) is configured as an oscillating lever which in particular has a longitudinal axis which is oriented substantially radially to a rotational axis (16) of the adjustment device (10) in a position of rest of the oscillating lever.

10. An adjustment device in accordance with any one of the preceding claims,
**characterized in that**
the adjustment device (10) is configured in ring shape; and/or **in that** the oscillation drive (22, 22') is associated with a rotating part of the adjustment device (10).

11. An adjustment device in accordance with any one of the preceding claims,
**characterized in that**
a plurality of adjustable elements, preferably two adjustable elements (12, 12'), are provided with which a respective oscillation drive (22, 22') is associated, with the oscillation drives (22, 22') preferably being of the same construction and/or being operable independently of one another; and/or **in that** at least two adjustable elements (12, 12') are provided which are associated with the same oscillation drive, with the oscillation drive comprising an oscillator (24) and two conversion apparatus (36) and each of the two conversion apparatus (36) converting the oscillatory movement of the oscillator (24) into a directed adjustment movement of one of the two elements (12, 12'), with in particular one conversion apparatus (36) substantially only being drive-effectively coupled with the respective associated element (12, 12') during a movement of the oscillator (24) in a first direction and the other conversion apparatus (36) substantially only being drive-effectively coupled with the respective associated element (12, 12') during a movement of the oscillator (24) in a second direction different from the first direction.

12. An adjustment system for rotating units having at least one adjustment device (10) in accordance with any one of the preceding claims which is integrated into a rotating unit, which is installed at a rotating unit and/or which is mounted about a rotating unit.

13. A machine tool having at least one adjustment device (10) in accordance with any one of the claims 1 to 11 or having an adjustment system in accordance with claim 12.

## Revendications

1. Dispositif de réglage (10) pour des unités rotatives, en particulier pour des broches de machines-outils, comportant au moins un élément réglable (12, 12') et un entraînement pour régler ledit élément (12, 12'),
dans lequel
l'entraînement comprend un entraînement en oscillation (22, 22') électromécanique,
**caractérisé en ce que**
l'entraînement en oscillation (22, 22') comprend une unité d'excitation électrique (30) qui comprend au moins un électroaimant (32),
il est prévu un oscillateur (24) qui, en vue d'un couplage magnétique avec l'électroaimant (32), comprend un matériau magnétique ou magnétisable et peut être mis en mouvement d'oscillation par l'unité d'excitation (30), et
il est prévu un moyen convertisseur (36) permettant de convertir le mouvement d'oscillation de l'oscillateur (24) en un mouvement de réglage orienté dudit élément (12, 12').

2. Dispositif de réglage selon la revendication 1,
**caractérisé en ce que**
le dispositif de réglage (10) est formé par un dispositif d'équilibrage pondéral, en particulier par une bague d'équilibrage (10) ou par une tête d'équilibrage, et
**en ce que** ledit au moins un élément réglable (12, 12') est formé par une masse d'équilibrage réglable (12, 12').

3. Dispositif de réglage selon la revendication 1 ou 2,
**caractérisé en ce que**
l'unité d'excitation (30) comprend au moins deux électroaimants (32) et l'oscillateur (24) est agencé au moins localement entre les deux électroaimants (32).

4. Dispositif de réglage selon l'une des revendications précédentes,
**caractérisé en ce que**
le moyen convertisseur (36) comprend un organe (40) monté mobile en rotation autour d'un axe de rotation (46) et réalisé pour convertir le mouvement d'oscillation d'un oscillateur (24) en un mouvement de rotation de l'organe (40), et en particulier l'organe monté mobile en rotation est réalisé sous la forme d'un organe à cliquet (40) et le moyen convertisseur (36) comprend un cliquet d'entraînement (38) qui comprend d'une part une portion couplée à l'oscillateur (24) et d'autre part une portion de cliquet (44), la portion de cliquet (44) venant attaquer l'organe à cliquet (40) au cours d'un mouvement d'oscillation de l'oscillateur (24) et exerçant sur l'organe à cliquet (40) une force qui agit dans une première direction de rotation (78) autour de l'axe de rotation (46), et en particulier le moyen convertisseur (36) comprend un cliquet d'arrêt (49) qui vient bloquer une rotation de l'organe à cliquet (40) dans une seconde direction de rotation opposée à la première direction de rotation (78).

5. Dispositif de réglage selon l'une des revendications précédentes,
**caractérisé en ce que**
l'entraînement comprend un mécanisme de transmission (60), en particulier une transmission par engrenage qui est agencé entre un moyen convertisseur (36) et ledit élément (12, 12') et qui transmet un mouvement du moyen convertisseur (36) en un mouvement dudit élément (12, 12').

6. Dispositif de réglage selon l'une des revendications précédentes,
**caractérisé en ce que**
l'entraînement comprend un moyen d'actionnement (68) qui peut être actionné entre au moins deux positions d'actionnement différentes, et un changement du moyen d'actionnement (68) d'une position d'actionnement vers une autre position d'actionnement provoque une inversion de la direction d'un mouvement dudit élément (12, 12').

7. Dispositif de réglage selon la revendication 6,
**caractérisé en ce que**
le moyen d'actionnement (68) comprend un organe intermédiaire (54) qui est monté mobile en rotation sur un bras pivotant (70) monté mobile en pivotement autour d'un axe de rotation (46), et dans une première position de pivotement du bras pivotant l'organe intermédiaire (54) engrène avec un premier organe de changement (56) d'un mécanisme de transmission (60), et dans une seconde position de pivotement du bras pivotant (70) il engrène avec un second organe de changement (57) d'un mécanisme de transmission (60), et/ou **en ce que** le moyen d'actionnement (68) comprend un entraînement d'actionnement électromécanique (72) qui comprend en particulier au moins un électroaimant (74).

8. Dispositif de réglage selon l'une des revendications précédentes,
**caractérisé en ce que**
il est prévu un mécanisme de retenue qui est déplaçable entre une position de retenue et une position de libération, et dans la position de retenue le mécanisme de retenue arrête ledit élément (12, 12'), et dans la position de libération il permet un mouvement dudit élément (12, 12').

9. Dispositif de réglage selon l'une des revendications précédentes,
**caractérisé en ce que**
l'oscillateur (24) est réalisé sous la forme d'un levier oscillant qui présente en particulier un axe longitudinal qui, dans une position de repos du levier oscillant, est orienté sensiblement radialement par rapport à un axe de rotation (16) du dispositif de réglage (10).

10. Dispositif de réglage selon l'une des revendications précédentes,
**caractérisé en ce que**
le dispositif de réglage (10) est réalisé sous forme annulaire et/ou **en ce que** l'entraînement en oscillation (22, 22') est associé à une partie rotative du dispositif de réglage (10).

11. Dispositif de réglage selon l'une des revendications précédentes,
**caractérisé en ce que**
il est prévu plusieurs éléments réglables (12, 12'), de préférence au nombre de deux, auxquels est associé respectivement un entraînement en oscillation (22, 22'), et de préférence les entraînements en oscillation (22, 22') sont de construction identique et/ou capables de fonctionner indépendamment l'un de l'autre, et/ou **en ce qu'**il est prévu au moins deux éléments réglables (12, 12') qui sont associés au même entraînement en oscillation, l'entraînement en oscillation comprenant un oscillateur (24) et deux moyens convertisseurs (36), et chacun des deux moyens convertisseurs (36) convertit le mouvement d'oscillation de l'oscillateur (24) en un mouvement de réglage orienté de l'un des deux éléments (12, 12'), et en particulier un moyen convertisseur (36) est couplé en entraînement avec ledit un élément respectif associé (12, 12') sensiblement uniquement pendant un mouvement de l'oscillateur (24) dans une première direction, et l'autre moyen convertisseur (36) y est couplé sensiblement uniquement pendant un mouvement de l'oscillateur (24) dans une seconde direction différente de la première direction.

12. Système de réglage pour des unités rotatives, comportant au moins un dispositif de réglage (10) selon l'une des revendications précédentes qui est intégré dans une unité rotative, rapporté sur une unité rotative et/ou monté autour d'une unité rotative.

13. Machine-outil comportant au moins un dispositif de réglage (10) selon l'une des revendications 1 à 11 ou comportant un système de réglage selon la revendication 12.
